# EUROPÄISCHE PATENTSCHRIFT

(11) **EP 2 630 007 B1**
(45) Veröffentlichungstag und Bekanntmachung des Hinweises auf die Patenterteilung: **22.07.2015**
(21) Anmeldenummer: 11749356.9
(22) Anmeldetag: 26.08.2011
(51) Int. Cl.: B60N 2/20, B60N 2/22, B60N 2/68

(54) **FAHRZEUGSITZ, INSBESONDERE KRAFTFAHRZEUGSITZ**
VEHICLE SEAT, IN PARTICULAR A MOTOR VEHICLE SEAT
SIÈGE DE VÉHICULE, EN PARTICULIER SIÈGE DE VÉHICULE AUTOMOBILE

(30) Priorität: 19.10.2010 DE 102010049328
(43) Veröffentlichungstag der Anmeldung: 28.08.2013
(73) Patentinhaber: Johnson Controls Components GmbH & Co. KG, 67657 Kaiserslautern (DE)
(72) Erfinder: MARKEL, Christian, 55232 Alzey (DE); DILL, Thomas, 67699 Heiligenmoschel (DE); PLUTA, Wolfgang, 67699 Heiligenmoschel (DE)
(74) Vertreter: Finger, Catrin
(86) Internationale Anmeldenummer: PCT/EP2011/004305
(87) Internationale Veröffentlichungsnummer: WO 2012/052088

(56) Entgegenhaltungen:
- DE-A1- 19 514 941
- DE-A1- 19 613 164
- DE-A1-102008 038 851
- US-A1- 2004 227 389

## Beschreibung

Die Erfindung betrifft einen Fahrzeugsitz mit den Merkmalen des Oberbegriffs des Anspruches 1 (siehe z.B. DE 10 2008 038 851 A1).

Bei bekannten Fahrzeugsitzen dieser Art weist der Lehnenrahmen zwei Seitenteile auf, welche oben und unten mittels je einer Quertraverse verbunden sind, wodurch der Lehnenrahmen umlaufend geschlossen ist. Die beiden Beschläge, mittels denen die Lehne relativ zum Sitzteil schwenkbar ist, sind jeweils an den Seitenteilen befestigt. Die Umformungen des Seitenteils sind eingeschränkt, wenn diese aus speziellen Werkstoffen bestehen. Zudem führen unterschiedliche Funktionalitäten der Beschläge zu einer Variantenbildung, welche unterschiedliche Werkzeuge erfordert.

Aus der o.g. DE 10 2008 038 851 A1 ist ein Lehnenrahmen eines Fahrzeugsitzes bekannt. Der Lehnenrahmen umfasst eine Rahmenstrebe, nämlich ein Seitenteil oder eine Quertraverse, die aus mehreren separat gefertigten Bestandteilen besteht, wobei diese Bestandteile mittels einer Steck- und/oder Rastverbindung zueinander lagefixierbar bzw. lagefixiert sind.

In der DE 196 13 164 A1 wird eine Rückenlehne für Fahrzeugsitze beschrieben. Bei dieser Rückenlehne mit zwei Seitenholmen, die beide aus einem hinteren und einem vorderen Träger bestehen, welche im Bereich ihres unteren Endabschnittes über einen Verbindungskörper sowie oberhalb desselben miteinander verbunden sind, setzt sich sowohl der vordere als auch der hintere Träger in den Querholm hinein fort, der die Seitenholme im Bereich ihres oberen Endes miteinander verbindet. Der vordere Träger liegt oberhalb des Verbindungskörpers und unterhalb des Querholms auf einem Stück seiner Länge am hinteren Träger an. Auf diesem Stück sind beide Träger fest miteinander verbunden. Die beiden sich vom einen zum anderen Seitenholm im Bereich des Querholms erstreckenden Querteile des hinteren und vorderen Trägers sind im Abstand voneinander übereinander angeordnet. Die beiden Querteile sind über ein an ihnen anliegendes Zwischenstück starr miteinander verbunden.

Aus der DE 195 14 941 A1 ist eine Rückenlehne für Fahrzeugsitze bekannt. Die Seitenholme der Rückenlehne sind im Bereich ihres unteren Endes mit je einem Gelenkbeschlag zu verbinden. Die Rückenlehne weist je einen Verbindungskörper für jeden Seitenholm mit einer blockartigen Materialpartie auf, die sowohl mit einer Anlagefläche für den Seitenholm als auch einer Anlagefläche für den Gelenkbeschlag versehen ist.

In der US 2004/0227389 A1 wird ein Sitzrückenlehnenrahmen für einen Fahrzeugsitz beschrieben, welcher zwei Seitenteile sowie eine obere und eine untere Quertraverse aufweist, die mit den Seitenteilen durch Punktschweißen verbunden sind.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das erfindungsgemäße Eckstück ist ein Teil des Lehnenrahmens, d.h. ohne das Eckstück wäre der Lehnenrahmen nicht umlaufend geschlossen. Die Seitenteile und die untere Quertraverse sind voneinander beabstandet, ohne direkten Kontakt und ohne direkte Verbindung außer mittels der Eckstücke, über welche der Kraftfluss erfolgt. Das Eckstück ermöglicht einerseits, dass das Seitenteil aus einem dünnen hochfesten Stahl ohne allzu große Umformungen ausgebildet wird, indem geometrisch größere Umformungen im Eckstück ausgebildet werden können. Zudem übernimmt das Eckstück die Schnittstelle zwischen Lehnenrahmen und Beschlag, welche bei bekannten Beschlägen am Seitenteil vorgesehen ist, so dass das Seitenteil ohne Berücksichtigung des Beschlags ausgebildet werden kann. Bei Lehnenrahmen mit Variantenbildung werden so die Herstellungskosten reduziert, insbesondere beim Seitenteil, welches Werkzeuge mit großen Abmessungen benötigt.

Aufgrund des Eckstücks ist es möglich, eine Variantenbildung beim Beschlag vorzusehen, wobei unterschiedliche (geometrische) Abmessungen der unterschiedlichen Varianten des Beschlags durch unterschiedliche Varianten des Eckstücks ausgeglichen werden. Die Baugruppe, welche dann das Eckstück und den Beschlag aufweist, hat dann Schnittstellen zum Seitenteil und zur unteren Quertraverse, welche von den Varianten unabhängig sind.

Mit den Eckstücken ist auch eine Variantenbildung hinsichtlich der Längsersteckung des Lehnenrahmens möglich, bei welcher die Seitenteile Gleichteile bleiben und durch die Eckstücke unterschiedliche verlängert werden.

Trotz der Variantenbildung von Eckstücken und Beschläge treten bei den unterschiedlichen Lehnenrahmen aufgrund der ähnlichen Anbindung gleiche oder ähnliche Lastflüsse auf

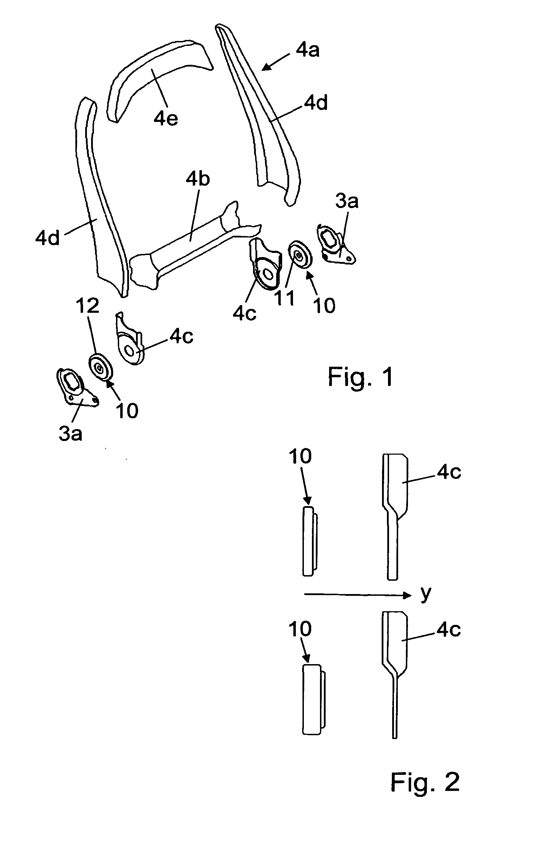

Im Folgenden ist die Erfindung anhand eines in der Zeichnung dargestellten Ausführungsbeispiels näher erläutert. Es zeigen
- Fig. 1: eine Explosionsdarstellung der Struktur der Lehne,
- Fig. 2: eine Seitenansicht zweier Beschläge mit unterschiedlicher Abmessung in y-Richtung und daran angepassten Eckstücken,

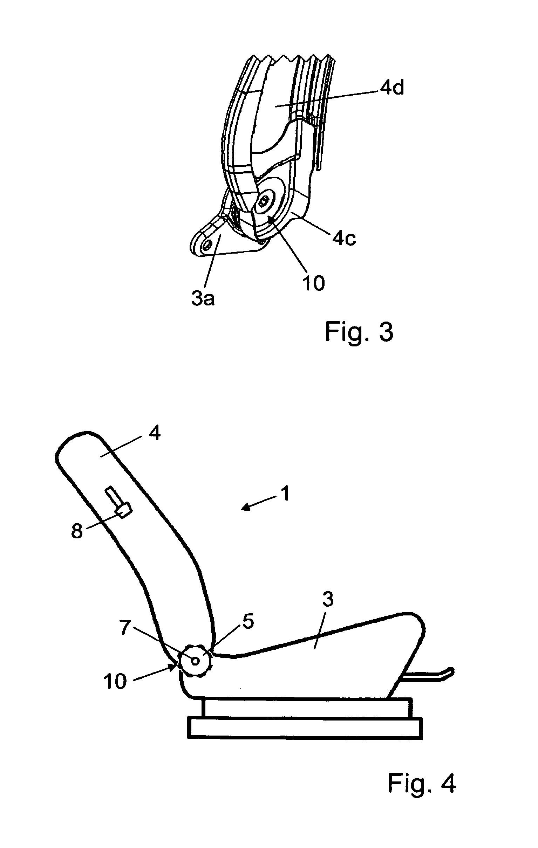

- Fig. 3: eine perspektivische Teilansicht einer Baugruppe, und
- Fig. 4: eine schematische Seitenansicht eines Fahrzeugsitzes..

Ein Fahrzeugsitz 1 für ein Kraftfahrzeug weist ein Sitzteil 3 und eine relativ zum Sitzteil 3 schwenkbare Lehne 4 auf. Die Fahrtrichtung des Kraftfahrzeuges und die gewöhnliche Anordnung des Fahrzeugsitzes 1 im Kraftfahrzeug definieren die nachfolgend verwendeten Richtungsangaben, wobei die senkrecht zur Fahrrichtung und horizontal verlaufende Richtung als axiale Richtung y bezeichnet sei.

Die Lehne 4 ist in an sich bekannter Weise gepolstert und weist als tragende Struktur einen Lehnenrahmen 4a auf, der als umlaufender Rahmen ausgebildet ist. Der Lehnenrahmen 4a weist eine untere Quertraverse 4b auf, welche in axialer Richtung y senkrecht zur Fahrrichtung und horizontal verläuft sei. Die untere Quertraverse 4b ist beispielsweise U-förmig profiliert und öffnet sich nach oben. An den beiden Enden der unteren Quertraverse 4b ist ein später genauer beschriebenes Eckstück 4c befestigt. An jedem der beiden Eckstücke 4c wiederum ist ein Seitenteil 4d befestigt, so dass das Eckstück 4c sowohl an der unteren Quertraverse 4b als auch an einem der Seitenteile 4d befestigt ist und diese miteinander verbindet. Das nach oben ragende Seitenteil 4d ist vorzugsweise mit einem nach innen weisenden Rand versehen und verjüngt sich nach oben. Eine obere Quertraverse 4e verläuft parallel zur unteren Quertraverse 4b und ist an ihren beiden Enden jeweils am oberen Ende der Seitenteil 4d befestigt. Somit bilden die Quertraversen 4b, 4e, die Seitenteile 4d und die Eckstücke 4c den Lehnenrahmen 4a.

Die Lehne 4 ist relativ zum Sitzteil 3 um eine in axialer Richtung y verlaufende Schwenkachse schwenkbar, vorzugsweise zwischen verschiedenen Gebrauchsstellungen neigungseinstellbar und gegebenenfalls (bei zweitürigen oder dreitürigen Kraftfahrzeugsitzen) freischwenkbar, wenn der Zugang zu einer hinteren Sitzreihe erleichtert werden soll. Zur Neigungseinstellung der Lehne 4 wird manuell, beispielsweise mittels eines Handrades 5, oder motorisch, beispielsweise mittels eines Elektromotors, eine Antriebswelle 7 gedreht, welche in axialer Richtung y im Übergangsbereich zwischen Sitzteil 3 und Lehne 4 angeordnet ist. Zum optional vorgesehenen Freischwenken der Lehne 4 wird ein Handhebel 8 an der Seite der Lehne 4 manuell betätigt. Auf beiden Seiten des Fahrzeugsitzes 1 greift die Antriebswelle 7 drehfest in einen Beschlag 10 ein, mittels dessen die Lehne 4 mit dem Sitzteil 3 verbunden und relativ zu diesem schwenkbar ist.

Vorzugsweise sind zwei gleiche oder spiegelbildliche Beschläge 10 vorgesehen, von denen jeder an genau einer der beiden Fahrzeugsitzseiten angeordnet und am Lehnenrahmen 4a befestigt ist. In abgewandelter Ausführung ist genau ein Beschlag 10 auf einer Fahrzeugsitzseite mit einem einfachen Drehgelenk auf der anderen Fahrzeugsitzseite kombiniert. Der Beschlag 10 weist wenigstens ein erstes Beschlagteil 11 und ein zweites Beschlagteil 12 auf, welche relativ zueinander verdrehbar sind. Der Beschlag 10 kann beispielsweise als Getriebebeschlag ausgebildet sein, so dass die sich mehrfach drehende Antriebswelle 7 vorzugsweise ein - vorliegend selbsthemmendes - Exzenterumlaufgetriebe antreibt, wie es beispielsweise in der DE 44 36 101 A1 oder der DE 20 2009 017 811 U1 beschrieben ist, deren diesbezüglicher Offenbarungsgehalt ausdrücklich einbezogen wird. Der Beschlag 10 kann auch als Rastbeschlag ausgebildet sein, so dass die Antriebswelle 7 mittels einer kleinen Drehung im Inneren des Beschlags 10 enthaltene Riegel entgegen Federvorspannung zurückzieht, wie es beispielsweise in der DE 10 2006 015 560 B3 beschrieben ist, deren diesbezüglicher Offenbarungsgehalt ausdrücklich einbezogen wird. Der Beschlag 10 kann für das Freischwenken eine zusätzliche Verriegelung in Form einer Freischwenkeinheit aufweisen, wie sie beispielsweise in der US 7,571,962 B2 beschrieben ist, deren diesbezüglicher Offenbarungsgehalt ausdrücklich einbezogen wird. Alternativ kann der Beschlag 10 aus zwei Einzelbeschlägen zusammengesetzt sein, wobei ein Einzelbeschlag für die Neigungseinstellung und ein Einzelbeschlag für das Freischwenken dient, wie es beispielsweise in der EP 1 799 499 B1 beschrieben ist, deren diesbezüglicher Offenbarungsgehalt ausdrücklich einbezogen wird.

In Abhängigkeit seiner Funktionalität bildet der Beschlag 10 Varianten (des Fahrzeugsitzes 1), unter denen er beim Zusammenbau der Lehne 4 gewählt werden kann. Die Varianten des Beschlags 10 benötigen regelmäßig unterschiedlich viel Bauraum. Vorliegend soll die Schnittstelle zwischen Beschlag 10 und Sitzteil 3 gleich bleiben, um die Variantenbildung auf die Lehne 4 zu beschränken. Um eine starke Erhöhung der Herstellungskosten der Lehne 4 durch diese Variantenbildung zu vermeiden, werden erfindungsgemäß für die Bildung des Lehnenrahmens 4a möglichst viele Gleichteile eingesetzt, nämlich die beiden Quertraversen 4b und 4e und die beiden Seitenteile 4d, die alle unabhängig vom verwendeten Beschlag 10 sind. Besonders vorteilhaft ist dies für die Seitenteile 4d, welche aus einem dünnen (0,8 mm), hochfesten Stahlblech ausgestanzt und - in begrenztem Maße - umgeformt werden und welche wegen ihrer Größe ein teures Werkzeug benötigen.

Erfindungsgemäß sind lediglich die Eckstücke 4c variantenabhängig an die Beschläge 10 angepasst, d.h. auf deren Abmessungen abgestimmt, wobei jeder Beschlag 10 an einem der Eckstücke 4c befestigt ist. Das Eckstück 4c kann aus einem Stahl mit dickerer Materialstärke ausgestanzt und umgeformt werden, wobei stärkere Umformungen als beim hochfesten Seitenteil 4d möglich sind. Das Eckstück 4c ist mit einem der beiden Beschlagteile 11 oder 12 des zugeordneten Beschlags 10 verbunden. Hierfür weist das Eckstück 4c vorzugsweise eine Öffnung auf, welche formschlüssig einen Absatz oder dergleichen auf der Außenseite des zugeordneten Beschlagteils 11 oder 12 aufnimmt. Das Eckstück 4c und der Beschlag 10 sind dann vorzugsweise entlang des Randes der Öffnung und/oder des Absatzes des zugeordneten Beschlagteils 11 oder 12 miteinander verschweißt, insbesondere mittels Laserschweißens. Das Eckstück 4c ist vorzugsweise mit einem in axialer Richtung y nach innen weisenden Rand versehen, welcher mit seiner Außenkante oben an das zugeordneten Seitenteil 4d und innen an die unterer Quertraverse 4b stößt, vorzugsweise überlappend, und dort verschweißt ist. Ein Anpassung des Eckstücks 4c an die unterschiedlichen Beschläge 10 kann dann eine Stufe in axialer Richtung y sein, welche die jeweilige axiale Abmessung des Beschlags 10, also diejenige in axialer Richtung y, ausgleicht, die Schnittstelle zu den Seitenteilen 4d und der unteren Quertraverse 4b, d.h. die Lage der Außenkante des Randes des Eckstücks 4c, aber gleich lässt.

Der Beschlag 10 ist mit dem nicht mit am Eckstück 4c befestigten Beschlagteil 12 oder 11 mit einem Sitzteiladapter 3a verbunden. Der Sitzteiladapter 3a weist vorzugsweise eine Öffnung auf, welche formschlüssig einen Absatz oder dergleichen auf der Außenseite des zugeordneten Beschlagteils 12 oder 11 aufnimmt. Der Sitzteiladapter 3a und der Beschlag 10 sind dann vorzugsweise entlang des Randes der Öffnung und/oder des Absatzes des zugeordneten Beschlagteils 12 oder 11 miteinander verschweißt, insbesondere mittels Laserschweißens. Der Sitzteiladapter 3a kann hinsichtlich der Variantenbildung ein Gleichteil sein, oder er ist variantenabhängig an die Funktionalität der Beschläge 10 angepasst.

Hinsichtlich der Reihenfolge des Zusammenbaus der Lehne 4 bestehen verschiedenen Möglichkeiten. Bevorzugt ist, dass in einem ersten Schritt der gewählte Beschlag 10 am dazu passend gewählten Eckstück 4c und am Sitzteiladapter 3a befestigt wird, und dann in einem zweiten Schritt diese Baugruppe am zugeordneten Seitenteil 4d befestigt wird. Die so gewonnene Baugruppe wird im vierten Schritt mit ihrem spiegelbildlichen Gegenstück und den beiden Quertraversen 4b und 4e zur rahmenförmigen Struktur der Lehne 4 verbunden. Alternativ werden im zweiten Schritt die beiden spiegelbildlichen Baugruppen aus Eckstück 4b, Beschlag 10 und Sitzteiladapter 3a mit der unteren Quertraverse 4b verbunden, und dann im dritten Schritt die so gewonnen Baugruppe mit den beiden Seitenteilen 4d und der oberen Quertraverse 4e zur rahmenförmigen Struktur der Lehne 4 verbunden

### Bezugszeichenliste

- 1: Fahrzeugsitz
- 3: Sitzteil
- 3a: Sitzteiladapter
- 4: Lehne
- 4a: Lehnenrahmen
- 4b: untere Quertraverse
- 4c: Eckstück
- 4d: Seitenteil
- 4e: obere Quertraverse
- 5: Handrad
- 7: Antriebswelle
- 8: Handhebel
- 10: Beschlag
- 11: erstes Beschlagteil
- 12: zweites Beschlagteil
- y: y-Richtung

## Patentansprüche

1. Fahrzeugsitz (1), insbesondere Kraftfahrzeugsitz, mit einem Sitzteil (3) und einer Lehne (4), die mit einem umlaufend ausgebildeten Lehnenrahmen (4a) als tragende Struktur versehen ist, welcher eine untere Quertraverse (4b), zwei Seitenteile (4d) und eine obere Quertraverse (4e) aufweist, und die mittels wenigstens eines am Lehnenrahmen (4a) befestigten Beschlags (10) relativ zum Sitzteil (3) schwenkbar ist, wobei als Teil des Lehnenrahmens (4a) wenigstens ein Eckstück (4c) vorgesehen ist, welches die untere Quertraverse (4b) mit einem der Seitenteile (4d) verbindet, wobei der Beschlag (10) an dem Eckstück (4c) befestigt ist,
**dadurch gekennzeichnet, dass** die Funktionalität des Beschlags (10) unter Bildung von Varianten wählbar ist, wobei das Eckstück (4c) variantenabhängig an den Beschlag (10) angepasst ist.

2. Fahrzeugsitz nach Anspruch 1, **dadurch gekennzeichnet, dass** wenigstens ein Sitzteiladapter (3a) zur Verbindung des Beschlags (10) mit der tragenden Struktur des Sitzteils (3) vorgesehen ist.

3. Fahrzeugsitz nach Anspruch 2, **dadurch gekennzeichnet, dass** der Beschlag (10) wenigstens zwei relativ zueinander verdrehbare Beschlagteile (11, 12) aufweist, von denen eines am Sitzteiladapter (3a) und das andere am Eckstück (4c) unter Bildung einer Baugruppe befestigt ist.

4. Fahrzeugsitz nach einem der vorhergehenden Ansprüche, **dadurch gekennzeichnet, dass** der Beschlag (10) variantenabhängig unterschiedliche Abmessungen, insbesondere in axialer Richtung (y) aufweist.

5. Fahrzeugsitz nach Anspruch 4, **dadurch gekennzeichnet, dass** das Eckstück (4c) die variantenabhängig unterschiedlichen Abmessungen des Beschlags (10) ausgleicht unter Beibehaltung der Schnittstellen zum Seitenteil (4d) und zur unteren Quertraverse (4b).

6. Fahrzeugsitz nach einem der vorhergehenden Ansprüche, **dadurch gekennzeichnet, dass** das Eckstück (4c) eine Stufe in axialer Richtung (y) aufweist.

7. Fahrzeugsitz nach einem der vorhergehenden Ansprüche, **dadurch gekennzeichnet, dass** die Lehne (4) auf beiden Fahrzeugsitzseiten zwischen dem jeweiligen Seitenteil (4d) und der unteren Quertraverse (4b) jeweils ein Eckstück (4c) und einen daran befestigten Beschlag (10) aufweist.

8. Verfahren zum Zusammenbau eines Fahrzeugsitzes (1) nach einem der vorhergehenden Ansprüche, **dadurch gekennzeichnet, dass** beim Zusammenbau der Lehne (4) der Beschlag (10) unter Varianten gewählt wird und das Eckstück (4c) in Abhängigkeit der gewählten Variante des Beschlags (10) gewählt wird, um die variantenabhängig unterschiedlichen Abmessungen des Beschlags (10) auszugleichen, während als Seitenteile (4d) und Quertraversen (4b, 4e) Gleichteile für alle Varianten verwendet werden.

9. Verfahren nach Anspruch 8, **dadurch gekennzeichnet, dass** beim Zusammenbau der Lehne (4) der Beschlag (10) mit dem Eckstück (4c) und einem Sitzteiladapter (3a) unter Bildung einer Baugruppe verbunden wird, welche vorzugsweise mit dem zugeordneten Seitenteil (4d) verbunden wird.

## Claims

1. A vehicle seat (1), in particular motor vehicle seat, comprising a seat part (3) and a backrest (4) which is provided with a backrest frame (4a) which is formed so as to run around the latter, is in the form of a supporting structure and has a lower crossmember (4b), two side parts (4d) and an upper crossmember (4e), and which backrest is pivotable relative to the seat part (3) by means of at least one fitting (10) fastened to the backrest frame (4a), wherein at least one corner piece (4c) is provided as part of the backrest frame (4a), said corner piece connecting the lower crossmember (4b) to one of the side parts (4d), wherein the fitting (10) is fastened to the corner piece (4c),
**characterized in that** the functionality of the fitting (10) is selectable with variants being formed, wherein the corner piece (4c) is matched to the fitting (10) in a manner dependent on the variant.

2. The vehicle seat as claimed in claim 1, **characterized in that** at least one seat part adapter (3a) is provided for connection of the fitting (10) to the supporting structure of the seat part (3).

3. The vehicle seat as claimed in claim 2, **characterized in that** the fitting (10) has at least two fitting parts (11, 12) which are rotatable relative to each other and of which one is fastened to the seat part adapter (3a) and the other is fastened to the corner piece (4c) with a subassembly being formed.

4. The vehicle seat as claimed in one of the preceding claims, **characterized in that** the fitting (10) has different dimensions, in particular in the axial direction (y), in a manner dependent on the variant.

5. The vehicle seat as claimed in claim 4, **characterized in that** the corner piece (4c) compensates for the dimensions of the fitting (10) that differ in a manner dependent on the variant, with the intersections with the side part (4d) and with the lower crossmember (4b) being maintained.

6. The vehicle seat as claimed in one of the preceding claims, **characterized in that** the corner piece (4c) has a step in the axial direction (y).

7. The vehicle seat as claimed in one of the preceding claims, **characterized in that** the backrest (4) has in each case a corner piece (4c) and a fitting (10) fastened thereto on both vehicle seat sides between each side part (4d) and the lower crossmember (4b).

8. A method for assembling a vehicle seat (1) as claimed in one of the preceding claims, **characterized in that**, during the assembly of the backrest (4), the fitting (10) is selected from variants and the corner piece (4c) is selected depending on the selected variant of the fitting (10) in order to compensate for the dimensions of the fitting (10) that differ depending on the variant, while identical parts for all of the variants are used as side parts (4d) and crossmembers (4b, 4e).

9. The method as claimed in claim 8, **characterized in that**, during the assembly of the backrest (4), the fitting (10) is connected to the corner piece (4c) and to a seat part adapter (3a) with a subassembly being formed, said subassembly preferably being connected to the associated side part (4d).

## Revendications

1. Siège de véhicule (1), en particulier siège de véhicule automobile, comprenant une partie de siège (3) et un dossier (4) qui est pourvu d'un cadre de dossier (4a) en tant que structure portante, réalisé sur le pourtour, qui présente une traverse transversale inférieure (4b), deux parties latérales (4d) et une traverse transversale supérieure (4e), et qui peut pivoter par rapport à la partie de siège (3) au moyen d'au moins une ferrure (10) fixée au cadre de dossier (4a), au moins une pièce de coin (4c) étant prévue en tant que partie du cadre de dossier (4a), laquelle relie la traverse transversale inférieure (4b) à l'une des parties latérales (4d), la ferrure (10) étant fixée à la pièce de coin (4c), **caractérisé en ce que** la fonctionnalité de la ferrure (10) peut être sélectionnée en formant des variantes, la pièce de coin (4c) étant adaptée à la ferrure (10) en fonction de la variante.

2. Siège de véhicule selon la revendication 1, **caractérisé en ce qu'**au moins un adaptateur de partie de siège (3a) est prévu pour connecter la ferrure (10) à la structure portante de la partie de siège (3).

3. Siège de véhicule selon la revendication 2, **caractérisé en ce que** la ferrure (10) présente au moins deux parties de ferrure (11, 12) pouvant tourner l'une par rapport à l'autre, dont l'une est fixée à l'adaptateur de partie de siège (3a) et l'autre est fixée à la pièce de coin (4c) en formant un module.

4. Siège de véhicule selon l'une quelconque des revendications précédentes, **caractérisé en ce que** la ferrure (10) présente des dimensions différentes en fonction des variantes, en particulier dans la direction axiale (y).

5. Siège de véhicule selon la revendication 4, **caractérisé en ce que** la pièce de coin (4c) compense les dimensions différentes en fonction des variantes de la ferrure (10) en conservant les interfaces avec la partie latérale (4d) et avec la traverse transversale inférieure (4b).

6. Siège de véhicule selon l'une quelconque des revendications précédentes, **caractérisé en ce que** la pièce de coin (4c) présente un étage dans la direction axiale (y).

7. Siège de véhicule selon l'une quelconque des revendications précédentes, **caractérisé en ce que** le dossier (4) présente, des deux côtés du siège de véhicule, entre la partie de siège respective (4d) et la traverse transversale inférieure (4b), à chaque fois une pièce de coin (4c) et une ferrure (10) fixée sur celle-ci.

8. Procédé pour l'assemblage d'un siège de véhicule (1) selon l'une quelconque des revendications précédentes, **caractérisé en ce que** lors de l'assemblage du dossier (4), la ferrure (10) est choisie parmi des variantes et la pièce de coin (4c) est choisie en fonction de la variante sélectionnée pour la ferrure (10), afin de compenser les dimensions différentes en fonction des variantes de la ferrure (10), tandis que l'on utilise pour toutes les variantes des pièces identiques en tant que parties latérales (4d) et traverses transversales (4b, 4e).

9. Procédé selon la revendication 8, **caractérisé en ce que** lors de l'assemblage du dossier (4), la ferrure (10) est connectée à la pièce de coin (4c) et à un adaptateur de partie de siège (3a) en formant un module, qui est de préférence connecté à la partie latérale associée (4d).
